Europäisches Patentamt

European Patent Office

Office européen des brevets

(11) Publication number: **0 106 910**
A1

# EUROPEAN PATENT APPLICATION

(21) Application number: 82109792.0

(22) Date of filing: 22.10.82

(51) Int. Cl.³: **A 23 L 1/236**

(43) Date of publication of application: 02.05.84
Bulletin 84/18

(84) Designated Contracting States: DE FR GB

(71) Applicant: AJINOMOTO CO., INC., 5-8,
Kyobashi 1-chome, Chuo-ku, Tokyo 104 (JP)

(72) Inventor: Tachibana, Takaroku, No. 753-10, Tomioka-cho
Kanazawa-ku, Yokohama-shi Kanagawa-ken (JP)
Inventor: Iwasaki, Shinichi, No. 3711-10,
Motoishikawa-cho Midori-ku, Yokohama-shi
Kanagawa-ken (JP)

(74) Representative: Schübel-Hopf, Ursula et al, Strehl,
Schübel-Hopf, Schulz Patentanwälte
Widenmayerstrasse 17, D-8000 München 22 (DE)

(54) **Dipeptide sweeteners in the form of shaped bodies and process for their production.**

(57) Dipeptide sweetener in the form of shaped bodies, which contains at least one excipient selected from the group of sugars, sugar alcohols, dextrin, soluble starch and gelatin and 0.3 to 30% by weight of a dipeptide sweetener, based on the weight of the excipient.

EP 0 106 910 A1

DIPEPTIDE SWEETENERS IN THE FORM OF SHAPED BODIES
AND PROCESS FOR THEIR PRODUCTION

The present invention relates to dipeptide sweeteners in the form of shaped bodies, such as cubes, and processes for their production, and its object is to provide low-calorie dipeptide sweeteners having not only good taste, and other desirable characteristics, but also excellent handling characteristics and appearance.

Dipeptide sweeteners typically represented by α-L-aspartyl-L-phenylalanine methyl ester (hereinafter referred to as AP) have refined sweet quality and exhibit an intensity of the sweet taste about 50 - 200 times stronger than sugar, and thus are suitable for the use as high-quality low-calorie sweeteners.

Sweeteners are used for various applications, including the so-called table use, and they are used in various forms, such as powder, granules, solid, syrup etc. Also, in the application of dipeptide sweeteners, the above-described various application forms can be contemplated, there are, however, several restrictions regarding their application from the aspect of the physical properties inherent to the dipeptide sweeteners as described below.

Namely, the dipeptide sweeteners such as AP etc., in their original powder form, are generally fine needle-shaped crystals, which have a great specific volume and are easily scattered. Further, both the dispersibility and solubility in water are low. For these reasons, if the original powder is used, it exhibits unfavourable physical properties when it is to be dissolved. In that case a so-called undissolved lump of powder is formed whose dissolution is very difficult. Therefore, the use of these sweeteners in form of the original powder like sucrose is not desirable. On the other hand, when better handling is attempted by avoiding the use of each original powder form, for example, by preparing a syrup, the result is a loss of sweetness, since the dipeptide sweeteners are unstable against moisture and heat. Therefore this cannot be regarded as a favorable embodiment of their use.

Apart from the problems concerning the physical properties described above, the dipeptide sweeteners cannot be said fully satisfactory in sweet quality when compared with sugars such as sucrose, fructose, galactose etc., although the dipeptide sweeteners exhibit extremely good sweet quality when compared with other low-calorie sweeteners. In case of dipeptide sweeteners, the initial taste is characterized by refined sweetness and has refreshing and satisfactory properties, but they tend to

0106910

leave the sweet taste for an unduly long time and have a tendency to a certain lack of thickness and mildness. Although they might tentatively satisfy the palate which has become familiar with sugars, particularly sucrose, they are yet too satisfactory and preferable from the aspect of sweet quality alone.

Accordingly, one object of the present invention is to provide dipeptide sweeteners as low-calorie sweeteners which may be easily handled, do not exhibit incompatibility particularly on table use, and also have a satisfactory taste, and a second object is to develop processes for producing dipeptide sweeteners which can fulfill these required conditions.

As a result of intensive and continued studies for the purpose of achieving the above objects, it has been found that the dipeptide sweeteners in the form of shaped bodies based on the composition and production processes described hereinbelow can satisfy the optimum conditions for providing dipeptide sweeteners as low-calorie sweeteners, especially for table use.

The above-described problems are overcome according to the invention by a dipeptide sweetener in the form of shaped bodies, containing at least one excipient selected from the group of sugars, sugar alcohols, dextrin, soluble starch and gelatin and 0.3 to 30 % by weight of a dipeptide

- 4 -

sweetener, based on the weight of the excipient.

By the invention there is further provided a process for producing a dipeptide sweetener , which is characterized by the following process steps :

Mixing at least one excipient selected from the group of sugars, sugar alcohols, dextrin, soluble starch and gelatin, which prior to the mixing has been crystallized or pelletized to a particle size of less than 1.19 mm, with 0.3 to 30 % by weight of a dipeptide sweetener powder, based on the weight of the excipient,

molding the mixture together with a binder material to the desired form and

drying the shaped bodies at a temperature of 65°C or lower.

Another embodiment of the present invention consists in a process for producing a dipeptide sweetener which is characterized by the following process steps :

Mixing a binder material, at least one powdered excipient selected from the group of sugars, sugar alcohols, dextrin, soluble starch and gelatin and 0.3 to 30 % by weight of a dipeptide sweetener, based on the weight of the excipient,

pelletizing the mixture to form granules,

molding the granules with a binder material to the desired form and

drying the shaped bodies at a temperature of 65°C or lower.

The present invention is now described in more detail. As the excipient to be used in the present invention, sugars, sugar alcohols, dextrin, soluble starch and gelatin may be mentioned, and especially the use of sugar or sugar alcohols, such as sucrose, lactose, anhydrous lactose, sorbitol, mannitol, maltitol etc. is desired for imparting a greater width to the taste of the dipeptide sweetener to render it more preferred as the sweet-tasting material. Further, since sorbitol, mannitol, maltitol etc. are natural low-caloric sweet-tasting materials, their use in combination with a dipeptide sweetener results in a sweetener having almost no caloric content. The excipient may be used either alone or as a combination of two or more excipients. Especially, when sugar or sugar alcohol which is not so favourable in respect of its hygroscopic properties, deliquescent properties etc. it to be used, the use in combination with gelatin etc. is desirable.

The dipeptide sweeteners used are α-L-aspartyl-L-phenyl-alanine lower alkyl esters, and the use of AP is preferred in view of its strength of sweetness and economy. The ratio of the excipient to the dipeptide sweetener in the composition is such that 0.3 - 30 % by weight of the dipeptide sweetener is used based on the excipient. The optimum ratio varies depending on the kind of the excipient, and, more specifically, for example, where the excipient chiefly comprises sucrose, the amount of the dipeptide sweetener is 2.0 - 10 % by weight thereof. Where the proportion of the excipient is lower than the above range, the effect to improve the solubility and dispersibility of the dipeptide sweetener becomes poor, the excipient effect, the effect as a filler, etc. cannot be manifested. Similarly, from the aspect of sweetness, the shaped bodies or cubes obtained become too small, and hence their handling is very inconvenient.

The excipient and the dipeptide sweetener of the above composition are mixed and molded into a desired form to provide a dipeptide sweetener in the form of shaped bodies, such as tablets or cubes. While the production process in this case is not particularly restricted, the processes described below are desired. The form is not limited and may be chosen from cubes, tablets, a flat domino shape, a spherical shape and other desired shapes.

As the first process for the production, a step to crystallize or pelletize the excipient into a particle size of less than 1.19 mm ( 16 mesh) is employed. Specifically, in the case of granulated sugar or sugar alcohol, it is desired to crystallize sorbitol, mannitol, maltitol etc. in an appropriate manner, while in other cases, a pelletizing step may be employed. Further, either when crystallized or pelletized, a single material may be employed, or two or more of excipients may be employed in combination. Furthermore, on crystallization or pelletization, it is possible to add materials other than the above unless inapposite to the purpose of the present invention. The particle size of the excipient is to be less than 1.19 mm (16 mesh). If it is coarser than above stated, it is difficult to mold into a desired form and also the mixing with the dipeptide sweetener powder is difficult, and thus the improvement of the solubility etc. of the dipeptide sweetener is impeded.

The excipient and the dipeptide sweetener powder are mixed and molded into a desired form, and on molding, a small amount, preferably 2.0 - 10% by weight of the above mixture, of a binder material is added and mixed. As the binder material water or any edible water-soluble binder material may be employed regardless of its kind, for example, water or alcohol, a saturated aqueous solution of sugar, sugar alcohol, an aqueous solution of gelatin, gum materials etc. With the amount of the binder material to be added as described above, the function as the binder material is fully manifested and the loss in sweetness during the drying step is almost prevented.

The molding method is not particularly restricted, and may be conducted in conventional manner, such as compression molding, molding using molds etc. After molding, the product is dried at a temperature of 65°C or lower, preferably at 60°C or lower. Also, the drying method is not particularly restricted, but it is preferred to employ one conducted at a lower temperature such as vacuum drying etc. In other words, this is because the dipeptide sweetener is not only unstable against heat but also, particularly when combined with sugar, brings about browning, which results in the loss in sweetness and the deterioration of the appearance.

As described above, instead of crystallizing or pelletizing the excipient beforehand, the dipeptide sweetener and the excipient may be pelletized beforehand in a second process.

The dipeptide sweetener powder and the excipient are mixed, and pelletized together with a small amount, preferably 1 - 20% by weight, of a binder material such as water, alcohol etc.. For pelletization, any pelletizing method suitable for powder starting materials may be employed, for example, an extruding pelletizing method, compression pelletizing method etc., which are preferred.

The obtained dipeptide granules are molded together with a binder material and dried, and concerning the molding and drying steps similar conditions as above described may be employed. In addition to the case where the dipeptide granules are employed alone, it is needless to say that the additional use of the excipient crystals and/or granules obtained in the above first process is not excluded.

Further, it is possible to add flavoring materials and coloring materials to the dipeptide sweetener cubes of the present invention. As the flavoring materials, natural or synthetic flavors such as lemon, orange, cinnamon, brandy, whiskey etc. may be employed, and the adding method may be mixing as a powder, or as a part or the whole of the binder material. As coloring materials, natural or synthetic coloring materials may be appropriately employed. Especially, when a flavoring material is added, the sweetener cubes have an improved flavor compared with the case, in which the flavoring material has been added to ordinary sugar cubes.

As described in detail hereinabove, the dipeptide sweetener cubes of the present invention have numerous merits. For example, they are excellent in physical properties and tasting properties, they especially exhibit physical properties which permit easy handling as table use sweeteners and good solubility, and at the same time, the procedures of the production process are simple. The thermal load applied to the dipeptide sweetener is lower and hence it is advantageous in view of the energy cost.

The present invention is more particularly described by the following examples.

Example 1

Formulation of Dipeptide Sweetener Cubes (A)

| | | |
|---|---|---|
| AP | 2.0 | Parts by weight |
| Granulated sugar (Commerically available granulated sugar, average particle size of ca. 240 μm) | 98.0 | " |
| Water | 4.0 | " |

The above formulation was kneaded on a kneader for 10 minutes, then molded in molds, and dried in a vacuum tray drier at 60°C for an hour, to prepare dipeptide sweetener cubes (A). The size of the cubes was made 1.0 cm x 1.0 cm x 0.9 cm (ca. 0.8 g) taking into consideration that the sweetness of the above formulation is about 5.0 times that of sugar.

When the obtained dipeptide sweetener cubes were evaluated for the physical properties and organoleptic properties, it completely dissolved in lukewarm water at 40°C in about 15 seconds and the evaluation that it has a refreshing and favorable taste was obtained. The solubility was determined by adding water to a 500 cc beaker, then placing one of the above cubes therein while gently stirring with a magnetic stirrer, and measuring the time to dissolve.

Example 2

Formulation of Dipeptide Sweetener Cubes (B)

| | | |
|---|---|---|
| AP | 5 | Pts. by weight |
| Anhydrous lactose | 87 | " |
| Dextrin | 8 | " |
| Water (for binding on pelletizing) | 7 | " |
| Water (for binding on cube molding) | 4 | " |

According to the above formulation, the starting materials except water were mixed, then 7 parts by weight of water were added and kneaded, then pelletized by extrusion and dried to

0106910

prepare dipeptide sweetener granules, after which procedures similar to those in Example 1 were followed to prepare dipeptide sweetener cubes.

When the obtained cubes were added to crangeade (temperature of 60°C), they dissolved within about 10 - 15 seconds, and the evaluation that both orange flavor and sweetness are good was obtained.

CLAIMS

1. Dipeptide sweetener in the form of shaped bodies, containing at least one excipient selected from the group of sugars, sugar alcohols, dextrin, soluble starch and gelatin and 0.3 to 30 % by weight of a dipeptide sweetener, based on the weight of the excipient.

2. Dipeptide sweetener according to claim 1, in the form of tablets or cubes.

3. Dipeptide sweetener according to claim 1 or 2, which additionally contains an edible binder.

4. A process for producing a dipeptide sweetener according to any of the claims 1 to 3, characterized by the following process steps :
Mixing at least one excipient selected from the group of sugars, sugar alcohols, dextrin, soluble starch and gelatin, which prior to the mixing has been crystallized or pelletized to a particle size of less than 1.19 mm, with 0.3 to 30 % by weight of a dipeptide sweetener powder, based on the weight of the excipient, molding the mixture together with a binder material to the desired form and
drying the shaped bodies at a temperature of 65°C or lower.

- 13 -

0106910

5. A process for producing a dipeptide sweetener according to any of the claims 1 to 3, characterized by the following process steps :

Mixing a binder material, at least one powdered excipient selected from the group of sugars, sugar alcohols, dextrin, soluble starch and gelatin and 0.3 to 30 % by weight of a dipeptide sweetener, based on the weight of the excipient,

pelletizing the mixture to form granules,

molding the granules with a binder material to the desired form and

drying the shaped bodies at a temperature of 65°C or lower.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-2 606 472 (GENERAL FOODS CORP.) <br> * Claims 1-5 * & FR-A1-2 302 052 | 1,2 | A 23 L 1/236 |
| | --- | | |
| A | US-A-4 254 154 (M.E. EISENSTADT) <br> * Abstract * | | |
| | ----- | | |

**TECHNICAL FIELDS SEARCHED (Int. Cl. 3)**

A 23 L 1/00

The present search report has been drawn up for all claims

| Place of search <br> BERLIN | Date of completion of the search <br> 19-05-1983 | Examiner <br> SCHULTZE D |
|---|---|---|